# EUROPÄISCHE PATENTSCHRIFT

(11) **EP 4 007 721 B1**
(45) Veröffentlichungstag und Bekanntmachung des Hinweises auf die Patenterteilung: **30.07.2025**
(21) Anmeldenummer: 20771827.1
(22) Anmeldetag: 11.09.2020
(51) Int. Cl.: B64D 11/06, B60N 3/00

(54) **TISCHANORDNUNG FÜR EIN FLUGZEUG UND PASSAGIERKABINENBEREICH**
TABLE ARRANGEMENT FOR AN AIRCRAFT AND PASSENGER CABIN AREA
AGENCEMENT DE TABLE POUR AÉRONEF ET ZONE DE CABINE PASSAGERS

(30) Priorität: 12.09.2019 DE 102019124550
(43) Veröffentlichungstag der Anmeldung: 08.06.2022
(73) Patentinhaber: Diehl Aviation Laupheim GmbH, 88471 Laupheim (DE); Airbus Operations GmbH, 21129 Hamburg (DE)
(72) Erfinder: WÖRZ, Wolfgang, 88471 Laupheim (DE); KRESS, Ulrich, 88471 Laupheim (DE); BRÄNDLE, Ralf, 89081 Ulm (DE); ILS, Markus, 88487 Walpertshofen (DE); HEIDER, Christian, 88480 Achstetten (DE); TOBORG, Andreas, 21129 Hamburg (DE)
(74) Vertreter: Diehl Patentabteilung
(86) Internationale Anmeldenummer: PCT/EP2020/075429
(87) Internationale Veröffentlichungsnummer: WO 2021/048329

(56) Entgegenhaltungen:
- EP-A1- 2 930 109
- WO-A1-2010/021544
- WO-A1-2014/051638
- US-A1- 2009 078 169
- US-A1- 2015 267 757
- US-A1- 2017 021 931

## Beschreibung

Die Erfindung betrifft eine Tischanordnung, die zum Einsatz in einer Passagierkabine eines Flugzeugs geeignet ist. Ferner betrifft die Erfindung einen mit einer derartigen Tischanordnung ausgestatteten Passagierkabinenbereich.

Eine Tischanordnung aus dem Stand der Technik ist beispielsweise aus der

EP 2 930 109 A1 sowie der US 2017 / 021 931 A1 bekannt.

In der US 2009 / 0 078 169 A1 ist ferner eine Tischanordnung mit den Merkmalen des Oberbegriffs von Patentanspruch 1 gezeigt.

Aus der US 2009 / 0 078 169 A1 ist ein Klapptisch und eine Stützrahmen-Baugruppe bekannt. Der Tisch enthält zwei ebene Teile, die durch ein Scharnierelement verbunden sind. Einer der ebenen Teile ist mit einem Stützrahmen verbunden, so dass der zusammengeklappte Tisch in eine verstaute Position innerhalb der Stützrahmen-Baugruppe bewegt werden kann. Die planaren Abschnitte umfassen einen proximalen Abschnitt bzw. ein inneres Element und einen distalen Abschnitt bzw. ein äußeres Element. Der proximale Abschnitt und der distale Abschnitt sind durch das Scharnierelement oder Mittelelement miteinander verbunden. Das Scharnierelement ermöglicht die Drehung des distalen Abschnitts in eine gefaltete Lage auf dem proximalen Abschnitt. Werden die beiden Planteile zusammengeklappt, entsteht in halboffener bzw. teilweise ausgeklappter Stellung eine kleinere Tischfläche. Wenn die beiden ebenen Teile entlang des Scharnierelements geöffnet werden, bilden die ebenen Teile und das Scharnierelement in der vollständig ausgefahrenen Position einen größeren zusammenhängenden Tisch.

In modernen Verkehrsmitteln, insbesondere Passagierflugzeugen ist die optimale Ausnutzung des in einer Passagierkabine zur Verfügung stehenden Raums von großer wirtschaftlicher Bedeutung. Zur Erledigung von Schreibarbeiten und dergleichen nutzen Crewmitglieder daher in der Regel kleine Mehrzweck-Klapptische, die beispielsweise im Bereich einer Bordküche oder in der Nähe eines Flugbegleitersitzes vorgesehen sein können.

Der Erfindung liegt die Aufgabe zugrunde, eine zum Einsatz in der Passagierkabine eines Verkehrsmittels geeigneten Tischanordnung bereitzustellen, die einem Crewmitglied, beispielsweise einem Purser, einen gut nutzbaren Arbeitsplatz zur Verfügung stellt, bei Nichtgebrauch aber platzsparend verstaut werden kann. Ferner liegt der Erfindung die Aufgabe zugrunde, einen mit einer derartigen Tischanordnung ausgestatteten Passagierkabinenbereich anzugeben.

Diese Aufgabe wird durch eine Tischanordnung mit den Merkmalen des Patentanspruchs 1 und einen Passagierkabinenbereich mit den Merkmalen des Patentanspruchs 13 gelöst.

Eine Tischanordnung umfasst ein Montageelement, das an einem Befestigungsstrukturelement befestigbar ist. Beispielsweise kann das Montageelement der Tischanordnung zur Befestigung an einem Befestigungsstrukturelement vorgesehen sein, das in Form eines zur Montage in einer Passagierkabine, insbesondere einer Flugzeugkabine geeigneten Monuments ausgebildet ist. Bei dem Monument kann es sich zum Beispiel um eine Bordküche, ein Toilettenmodul, eine Trennwand, einen Stauschrank oder ein vergleichbares Monument handeln. Das Montageelement der Tischanordnung definiert eine Montageebene. Im an einem Befestigungsstrukturelement befestigten Zustand der Tischanordnung kann sich die durch das Montageelement definierte Montageebene beispielsweise im Wesentlichen parallel zu einer dem Montageelement zugewandten Wandfläche des Befestigungsstrukturelements erstrecken.

Die Tischanordnung umfasst ferner ein mit dem Montageelement verbundenes erstes Tischelement. Das erste Tischelement ist relativ zu dem Montageelement um eine erste Schwenkachse zwischen einer Verstauposition und einer Nutzungsposition verschwenkbar. In seiner Verstauposition erstreckt sich das erste Tischelement und dessen Mittenlängsachse im Wesentlichen parallel zu der durch das Montageelement definierten Montageebene. Im Gegensatz dazu erstreckt sich das erste Tischelement und dessen Mittenlängsachse in seiner Nutzungsposition im Wesentlichen senkrecht zu der durch das Montageelement definierten Montageebene. Dadurch kann das erste Tischelement, je nach Bedarf, entweder platzsparend verstaut oder als Arbeitsplatz genutzt werden.

Schließlich umfasst die Tischanordnung ein mit dem ersten Tischelement verbundenes zweites Tischelement. Das zweite Tischelement ist im Wesentlichen parallel zu dem ersten Tischelement angeordnet und relativ zu dem ersten Tischelement um eine in der Nutzungsposition parallel zur Montageebene angeordnete Drehachse drehbar. In der Verstauposition des ersten Tischelements ist die Drehachse senkrecht zur Montageebene angeordnet. Durch die Verbindung mit dem ersten Tischelement wird das zweite Tischelement gemeinsam mit dem ersten Tischelement bewegt, wenn das erste Tischelement zwischen seiner Verstauposition und seiner Nutzungsposition verschwenkt wird. Wenn sich das erste Tischelement in seiner Verstauposition befindet, kann somit auch das parallel zu dem ersten Tischelement angeordnete zweite Tischelement platzsparend verstaut werden. Wenn sich das erste Tischelement dagegen in seiner Nutzungsposition befindet, kann das zweite Tischelement durch eine Drehung relativ zu dem ersten Tischelement um die Drehachse in eine Position gebracht werden, die eine Nutzung sowohl des ersten Tischelements als auch des zweiten Tischelements als Arbeitsplatz ermöglicht. Dadurch wird ein vergleichsweise großzügiger Arbeitsplatz geschaffen.

Vorzugsweise ist das zweite Tischelement im Bereich eines von der ersten Schwenkachse abgewandten Endes des ersten Tischelements mit dem ersten Tischelement verbunden. Dadurch kann die durch das erste und das zweite Tischelement bereitgestellte Arbeitsfläche maximiert werden. Insbesondere ist auch die Drehachse im Bereich eines von der ersten Schwenkachse abgewandten Endes des ersten Tischelements angeordnet. Das von der ersten Schwenkachse abgewandte Ende des ersten Tischelements ist vorzugsweise abgerundet ausgebildet. Zusätzlich oder alternativ dazu kann ein mit dem ersten Tischelement verbundenes Ende des zweiten Tischelements ebenfalls abgerundet ausgebildet sein. Ein freies Ende des zweiten Tischelements kann dagegen eine gerade Kante aufweisen.

Zusätzlich oder alternativ dazu kann im Bereich der Drehachse ein Reibungskrafterzeugungselement vorgesehen sein, das dazu eingerichtet ist, eine unerwünschte Bewegung des zweiten Tischelements relativ zu dem ersten Tischelement um die Drehachse zu minimieren. Das Reibungskrafterzeugungselement ist vorzugsweise im Bereich der Drehachse zwischen dem ersten und dem zweiten Tischelement angeordnet und kann beispielsweise aus einem Kunststoffmaterial, einem Elastomermaterial oder dergleichen bestehen, um einer unerwünschten Drehung des zweiten Tischelements um die Drehachse entgegenzuwirken.

In einer Ausführungsform ist das Reibungskrafterzeugungselement so ausgestaltet, dass es eine konstante, bleibende Reibungskraft erzeugt. Diese Reibungskraft kann einmalig, beispielsweise bei der Montage der Tischanordnung, mittels einer Schraube oder dergleichen eingestellt werden. Falls gewünscht, kann das Reibungskrafterzeugungselement aber auch so gestaltet sein, dass die von ihm aufgebrachte Reibungskraft variabel und manuell einstellbar ist. Ein Nutzer der Tischanordnung kann dann beispielsweise zunächst bei deaktiviertem Reibungskrafterzeugungselement das zweite Tischelement um die Drehachse drehen und anschließend das Reibungskrafterzeugungselement aktivieren, um das zweite Tischelement in seiner Position zu halten.

In einer bevorzugten Ausführungsform der Tischanordnung ist das zweite Tischelement relativ zu dem ersten Tischelement um die Drehachse zwischen einer Überlagerungsposition und einer Arbeitsposition drehbar. Wenn sich das zweite Tischelement relativ zu dem ersten Tischelement in seiner Überlagerungsposition befindet, sind das erste und das zweite

Tischelement vorzugsweise in einer einander maximal überlagernden Position angeordnet, d.h. eine Fläche, um die eines der beiden Tischelemente das andere Tischelement überragt, ist minimiert. Eine Längsachse, insbesondere die Mittenlängsachse des ersten Tischelements erstreckt sich dann vorzugsweise parallel zu einer Längsachse, insbesondere Mittenlängsachse des zweiten Tischelements. Wenn sich das erste Tischelement in seiner Verstauposition befindet, ist das zweite Tischelement vorzugsweise relativ zu dem ersten Tischelement in seiner Überlagerungsposition angeordnet. Dadurch wird der Platzbedarf der Tischanordnung minimiert. Die Drehachse ist senkrecht zu den beiden Mittenlängsachsen von erstem und zweitem Tischelement, insbesondere in einem Kreuzungspunkt der beiden Mittenlängsachsen angeordnet. Somit schneidet die Drehachse die beiden Mittenlängsachsen insbesondere in dem Kreuzungspunkt.

Im Gegensatz dazu kann die Längsachse des ersten Tischelements mit der Längsachse des zweiten Tischelements einen Winkel von ca. 80 bis 120°, insbesondere einen Winkel von ca. 90 bis 110° bilden, wenn sich das zweite Tischelement relativ zu dem ersten Tischelement in seiner Arbeitsposition befindet. Die Längsachse des ersten Tischelements kann sich beispielsweise im Wesentlichen senkrecht zu der durch das Montageelement definierten Montageebene erstrecken, wenn sich das erste Tischelement in seiner Nutzungsposition befindet. Dadurch kann ein besonders komfortabler Arbeitsplatz mit zwei "Tischschenkeln" geschaffen werden.

Das zweite Tischelement ist, zumindest dann, wenn das erste Tischelement in seiner Verstauposition angeordnet ist, relativ zu dem ersten Tischelement in einer Richtung parallel zur Mittenlängsachse des ersten Tischelements und der Längsachse des zweiten Tischelements verschiebbar. Insbesondere kann das zweite Tischelement derart mit dem ersten Tischelement verbunden sein, dass es relativ zu dem ersten Tischelement in Richtung der ersten Schwenkachse parallel zu der Längsachse des ersten Tischelements und der Längsachse des zweiten Tischelements verschiebbar ist, wenn das erste Tischelement in seiner Verstauposition angeordnet ist.

Vorzugsweise hat das zweite Tischelement eine geringere Fläche als das erste Tischelement. Beispielsweise kann das zweite Tischelement in Richtung seiner Längsachse eine kürzere Abmessung aufweisen als das erste Tischelement in Richtung seiner Längsachse. Zusätzlich oder alternativ dazu kann das zweite Tischelement kongruent zu einem Abschnitt des ersten Tischelements ausgebildet sein, d.h. das zweite Tischelement kann so geformt sein, dass es einen Abschnitt des ersten Tischelements vollständig überlagert, wenn es relativ zu dem ersten Tischelement in seiner Überlagerungsposition angeordnet ist. Der kongruent zu dem zweiten Tischelement ausgebildete Abschnitt des ersten Tischelements bildet vorzugsweise einen von der ersten Schwenkachse abgewandten Abschnitt des ersten Tischelements.

Das erste Tischelement kann mit einem ersten Kantenschutzprofil versehen sein. Das erste Kantenschutzprofil, das beispielsweise aus einem geeigneten Kunststoffmaterial bestehen kann, kann sich entlang zumindest eines Abschnitts eines Umfangsrands des ersten Tischelements erstrecken. Vorzugsweise erstreckt sich das erste Kantenschutzprofil entlang des gesamten Umfangsrands des ersten Tischelements und bildet damit eine durchgängige Umrandung einer Tischfläche des ersten Tischelements. Zusätzlich oder alternativ dazu kann auch das zweite Tischelement mit einem zweiten Kantenschutzprofil versehen sein, das beispielsweise aus einem geeigneten Kunststoffmaterial bestehen kann und sich vorzugsweise entlang zumindest eines Abschnitts eines Umfangsrands des zweiten Tischelements erstreckt. Vorzugsweise erstreckt sich das zweite Kantenschutzprofil entlang des gesamten Umfangsrands des zweiten Tischelements und bildet damit eine durchgängige Umrandung einer Tischfläche des zweiten Tischelements. Ein Kantenschutzprofil schützt einen Randbereich des ersten und/oder des zweiten Tischelements vor Beschädigungen.

Vorzugsweise ragt das erste Kantenschutzprofil in einer Richtung parallel zu der Drehachse über die Tischfläche des ersten Tischelements hinaus. Zusätzlich oder alternativ dazu kann auch das zweite Kantenschutzprofil in einer Richtung parallel zu der Drehachse über die Tischfläche des zweiten Tischelements hinausragen. Ein derartiges Design des Kantenschutzprofils gewährleistet, dass verschüttete Flüssigkeiten zumindest bis zu einer gewissen Menge zurückgehalten werden und sichert auf der Tischanordnung abgelegte Gegenstände gegen Herunterrutschen.

Die Tischfläche des ersten Tischelements kann rutschhemmend ausgebildet sein. Zusätzlich oder alternativ dazu kann auch die Tischfläche des zweiten Tischelements rutschhemmend ausgebildet sein. Beispielsweise kann/können das erste Tischelement und/oder das zweite Tischelement aus einem rutschhemmenden Material bestehen oder mit einer rutschhemmenden Beschichtung versehen sein.

In einer bevorzugten Ausführungsform der Tischanordnung ist das zweite Tischelement derart relativ zu dem ersten Tischelement angeordnet, dass eine Unterseite des zweiten Tischelements der Tischfläche des ersten Tischelements zugewandt ist. Dies ermöglicht eine besonders einfache Bedienung der Tischanordnung, insbesondere beim Überführen des zweiten Tischelements zwischen seiner Überlagerungsposition und seiner Arbeitsposition und beim Überführen des ersten Tischelements zwischen seiner Nutzungsposition und seiner Verstauposition.

Das erste Tischelement und das zweite Tischelement sind vorzugsweise so dimensioniert, dass ein Nutzer der Tischanordnung drei DIN A4 Blätter auf dem ersten Tischelement und dem zweiten Tischelement ablegen kann. Insbesondere ist das erste Tischelement so geformt, dass seine Abmessung in Richtung seiner Längsachse größer ist als seine Abmessung in einer Richtung senkrecht zu seiner Längsachse. Zusätzlich oder alternativ dazu kann das zweite Tischelement so geformt sein, dass seine Abmessung in Richtung seiner Längsachse größer ist als seine Abmessung in einer Richtung senkrecht zu seiner Längsachse. Die Abmessungen des ersten Tischelements in Richtung seiner Längsachse und senkrecht zu seiner Längsachse sind vorzugsweise so bemessen, dass ein Nutzer der Tischanordnung zwei DIN A4 Blätter im Querformat auf dem ersten Tischelement ablegen kann. Die Abmessungen des zweiten Tischelements in Richtung seiner Längsachse und senkrecht zu seiner Längsachse sind vorzugsweise so bemessen, dass ein Nutzer der Tischanordnung ein DIN A4 Blatt im Querformat auf dem zweiten Tischelement ablegen kann.

Ferner kann an dem ersten Tischelement ein Handgriff ausgebildet sein. Der Handgriff kann von einem Benutzer gegriffen werden, wenn das erste Tischelement zwischen seiner Verstauposition und seiner Nutzungsposition verschwenkt werden soll. Der Handgriff ist insbesondere im Bereich des von der ersten Schwenkachse abgewandten Endes des ersten Tischelements vorgesehen. Beispielsweise kann der Handgriff in Form einer Mulde ausgebildet sein, die in eine der Tischfläche des ersten Tischelements gegenüberliegende Unterseite des ersten Tischelements eingeformt ist.

Erfindungsgemäß ist die erste Schwenkachse, um die das erste Tischelement zwischen seiner Verstauposition und seiner Nutzungsposition verschwenkbar ist, bei einer Überführung des ersten Tischelements zwischen seiner Verstauposition und seiner Nutzungsposition relativ zu dem Montageelement zwischen einer Ruheposition und einer Betriebsposition bewegbar. Bei der Bewegung der ersten Schwenkachse relativ zu dem Montageelement kann es sich um eine translatorische Bewegung der ersten Schwenkachse in der durch das Montageelement definierten Montageebene handeln. Bei einer Überführung des ersten Tischelements zwischen seiner Verstauposition und seiner Nutzungsposition führt folglich das der ersten Schwenkachse zugewandte Ende des ersten Tischelements nicht nur eine Schwenkbewegung um die erste Schwenkachse, sondern auch eine translatorische Bewegung in der Montageebene aus.

Wenn die Tischanordnung betriebsbereit an einem Befestigungsstrukturelement in einer Flugzeugkabine montiert ist, wird die erste Schwenkachse bei einer Überführung des ersten Tischelements aus seiner Verstauposition in seine Nutzungsposition vorzugsweise in der durch das Montageelement definierten Montageebene relativ zu dem Montageelement nach oben verschoben. Umgekehrt wird die erste Schwenkachse bei einer Überführung des ersten Tischelements aus seiner Nutzungsposition in seine Verstauposition vorzugsweise in der durch das Montageelement definierten Montageebene relativ zu dem Montageelement nach unten verschoben. Die verschiebbare Ausgestaltung der ersten Schwenkachse ermöglicht eine besonders platzsparende Ausführung der Tischanordnung, da das erste Tischelement dadurch in seiner Verstauposition in Richtung seiner Längsachse deutlich weniger über das Montageelement hinausragt als dies bei einer Anordnung mit einer starren ersten Schwenkachse der Fall wäre.

Die Tischanordnung kann ferner eine Führungseinrichtung zur Führung der Bewegung der ersten Schwenkachse zwischen ihrer Ruheposition und ihrer Betriebsposition umfassen. Beispielsweise kann die Führungseinrichtung mindestens eine Führungsschiene umfassen, in der ein Ende der ersten Schwenkachse verschiebbar aufgenommen ist. Vorzugsweise umfasst die Führungseinrichtung zwei zueinander im Wesentlichen parallele Führungsschienen, die jeweils ein Ende der ersten Schwenkachse verschiebbar aufnehmen. Die Führungseinrichtung, d.h. die Führungsschiene(n) der Führungseinrichtung ist/sind vorzugsweise an dem Montageelement befestigt.

In einer bevorzugten Ausführungsform umfasst das Montageelement der Tischanordnung zwei Seitenwände. Die Seitenwände des Montageelements können sich im Wesentlichen senkrecht zu der durch das Montageelement definierten Montageebene erstrecken. Zusätzlich oder alternativ dazu können sich die Seitenwände des Montageelements im Wesentlichen parallel zueinander erstrecken. Zusätzlich oder alternativ dazu kann das Montageelement eine Rückwand umfassen. Die Rückwand erstreckt sich vorzugsweise in der durch das Montageelement definierten Montageebene.

Die Tischanordnung umfasst vorzugsweise ferner einen Arretierungsmechanismus zur Arretierung des ersten Tischelements in seiner Nutzungsposition. Der Arretierungsmechanismus kann beispielsweise ein mit dem Montageelement verbundenes erstes Arretierelement sowie ein zu dem ersten Arretierelement komplementäres und mit dem ersten Tischelement verbundenes zweites Arretierelement umfassen. Das Arretierelement kann beispielsweise im Bereich des der ersten Schwenkachse zugewandten Endes des ersten Tischelements an dem ersten Tischelement angebracht sein.

In einer besonders bevorzugten Ausführungsform ist der Arretierungsmechanismus so ausgestaltet, dass er durch Aufbringen einer Druckkraft auf die Tischfläche des sich in seiner Nutzungsposition angeordneten ersten Tischelements aktivierbar ist. Beispielsweise können das erste und/oder das zweite Arretierelement des Arretierungsmechanismus so angeordnet und konstruiert sein, dass sie automatisch miteinander in Eingriff gelangen, sobald ein Nutzer eine entsprechende Druckkraft auf die Tischfläche des sich in seiner Nutzungsposition angeordneten ersten Tischelements aufbringt.

Zusätzlich oder alternativ dazu kann der Arretierungsmechanismus so ausgestaltet sein, dass seine Aktivierung mit einem hörbaren Geräusch verbunden ist. Beispielsweise können das erste und/oder das zweite Arretierelement des Arretierungsmechanismus so konstruiert sein, dass ein Klickgeräusch zu hören ist, wenn die beiden Arretierelemente miteinander in Eingriff gelangen. Ein Nutzer der Tischanordnung erhält dann ein hörbares Signal, das ihm anzeigt, dass das erste Tischelements sicher in seiner Nutzungsposition.

Ferner kann die Tischanordnung einen manuell betätigbaren Lösemechanismus zur Lösung des Arretierungsmechanismus umfassen. Der Lösemechanismus kann an dem Montageelement befestigt sein. Beispielsweise kann der Lösemechanismus einen Betätigungsknopf umfassen, der über ein Verbindungselement mit dem ersten Arretierelement des Arretierungsmechanismus in Verbindung steht. Der Betätigungsknopf kann beispielsweise an einem Halteelement befestigt sein, das sich zwischen den beiden Seitenwänden des Montageelements erstreckt. Eine manuelle Betätigung, beispielsweise ein Drücken des Betätigungsknopfes, kann über das Verbindungselement an das erste Arretierelement übertragen werden, wodurch das erste Arretierelement von dem zweiten Arretierelement gelöst werden kann.

Die Tischanordnung umfasst vorzugsweise ferner ein Stützelement, dessen erstes Ende um eine zweite Schwenkachse schwenkbar mit dem Montageelement verbunden ist. Ein zweites Ende des Stützelements ist dagegen vorzugsweise um eine dritte Schwenkachse schwenkbar mit dem ersten Tischelement verbunden. Insbesondere ist das zweite Ende des Stützelements mit einer Unterseite des ersten Tischelements verbunden. Das Stützelement ist demzufolge relativ zu dem Montageelement und dem ersten Tischelement zwischen einer Ruheposition und einer Stützposition verschwenkbar. In seiner Ruheposition, die das Stützelement einnimmt, wenn sich das erste Tischelement in seiner Verstauposition befindet, ist das Stützelement im Wesentlichen parallel zu dem ersten Tischelement angeordnet. In seiner Stützposition, die das Stützelement einnimmt, wenn sich das erste Tischelement in seiner Nutzungsposition befindet, bildet dagegen eine Längsachse des ersten Tischelements mit einer Längsachse des Stützelements einen Winkel von ca. 30 bis 60°, insbesondere einen Winkel von ca. 40 bis 50° und insbesondere bevorzugt einen Winkel von ca. 45°.

Das Stützelement verleiht dem ersten Tischelement eine erhöhte Tragfähigkeit, so dass das erste Tischelement belastbarer ist als das zweite Tischelement. Vorzugsweise ist das Stützelement so dimensioniert, dass das erste Tischelement mit 5 kg belastbar ist. Dadurch wird es ermöglicht, dass ein Nutzer der Tischanordnung auf dem ersten Tischelement ein elektronisches Gerät, wie zum Beispiel ein Tablet oder einen leichten Laptop ablegen kann.

Darüber hinaus kann die Tischanordnung einen Sicherungsmechanismus zur Sicherung des ersten Tischelements in seiner Verstauposition umfassen. Der Sicherungsmechanismus kann beispielsweise mindestens einen Sicherungshebel umfassen, der um eine Drehachse drehbar an dem Montageelement angebracht sein kann. Wenn sich der Sicherungshebel in einer Sicherungsposition befindet, liegt er vorzugsweise an einer der Tischfläche des ersten Tischelements gegenüber liegenden Unterseite des ersten Tischelements oder dem Stützelement an und hält das erste Tischelement dadurch in seiner Verstauposition. Wenn sich der Sicherungshebel in einer Freigabeposition befindet, gibt er dagegen das erste Tischelement oder das Stützelement frei, so dass das erste Tischelement aus seiner Verstauposition in seine Nutzungsposition bewegt werden kann. Um eine besonders zuverlässige Sicherung des ersten Tischelements in seiner Verstauposition zu gewährleisten, kann der Sicherungsmechanismus mit zwei Sicherungshebeln versehen sein. Der Sicherungsmechanismus erfüllt dann die Anforderungen für eine Flugzeugzulassung. Die beiden Sicherungshebel sind vorzugsweise derart an dem Montageelement befestigt, dass sie in ihrer Sicherungsposition im Bereich zweier einander gegenüberliegender Randbereiche des ersten Tischelements an der Unterseite des ersten Tischelements oder im Bereich zweier einander gegenüberliegender Randbereiche des Stützelements anliegen.

Ein Passagierkabinenbereich, insbesondere ein Flugzeugpassagierkabinenbereich umfasst ein Befestigungsstrukturelement und eine oben beschriebene Tischanordnung. Das Befestigungsstrukturelement ist insbesondere in Form eines Monuments, beispielsweise einer Bordküche, eines Toilettenmoduls, einer Trennwand eines Stauschranks oder eines vergleichbaren Monuments ausgebildet. Das Montageelement der Tischanordnung ist an dem Befestigungsstrukturelement befestigt.

In einer bevorzugten Ausführungsform des Passagierkabinenbereichs ist an dem Befestigungsstrukturelement benachbart zu der Tischanordnung ein Sitz, insbesondere ein Flugbegleitersitz befestigt. Die Tischanordnung ist dann für eine auf dem Sitz sitzende Person optimal nutzbar.

Eine bevorzugte Ausführungsform der Erfindung wird nun anhand der beigefügten schematischen Zeichnungen näher erläutert, von denen
- Figur 1: eine zum Einsatz in einer Passagierkabine, insbesondere einer Flugzeugpassagierkabine geeignete Tischanordnung in einer Frontansicht zeigt, wobei sich ein erstes Tischelement der Tischanordnung in einer Verstauposition befindet,
- Figur 2: die Tischanordnung gemäß Figur 1 in einer Rückansicht zeigt,
- Figur 3: die Tischanordnung gemäß Figur 1 in einer dreidimensionalen Ansicht zeigt,
- Figur 4: die Tischanordnung gemäß Figur 3 bei einer Überführung des ersten Tischelements der Tischanordnung aus seiner Verstauposition in eine Nutzungsposition zeigt,
- Figur 5: die Tischanordnung gemäß der Figuren 3 und 4 zeigt, wobei das erste Tischelement der Tischanordnung seine Nutzungsposition einnimmt, während ein zweites Tischelement der Tischanordnung relativ zu dem ersten Tischelement in einer Überlagerungsposition angeordnet ist,
- Figuren 6a und b: die Tischanordnung gemäß Figur 5 zeigen, wobei das zweite Tischelement relativ zu dem ersten Tischelement in einer Arbeitsposition angeordnet ist,
- Figur 7: die Tischanordnung gemäß Figur 6a mit einem "durchsichtig" gezeichneten zweiten Tischelement zeigt,
- Figur 8: die Tischanordnung gemäß der Figuren 6a und b in einer Seitenansicht zeigt,
- Figur 9: die Tischanordnung gemäß Figur 8 in einer Draufsicht zeigt und
- Figur 10: einen mit einer Tischanordnung gemäß den Figuren 1 bis 9 ausgestatteten Flugzeugpassagierkabinenbereich zeigt.

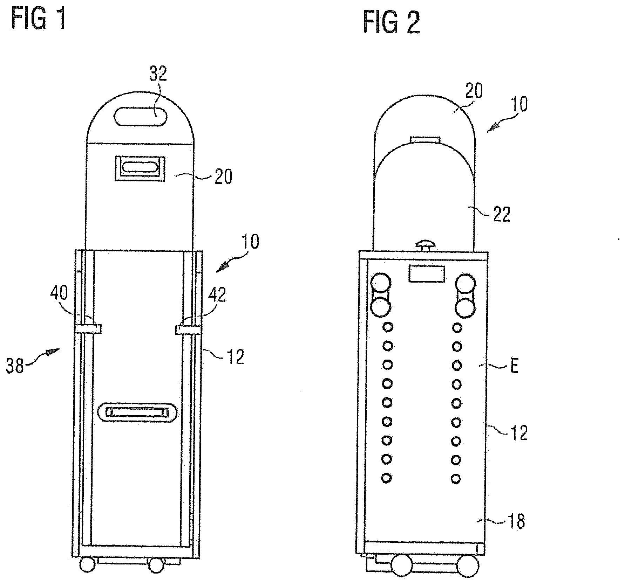

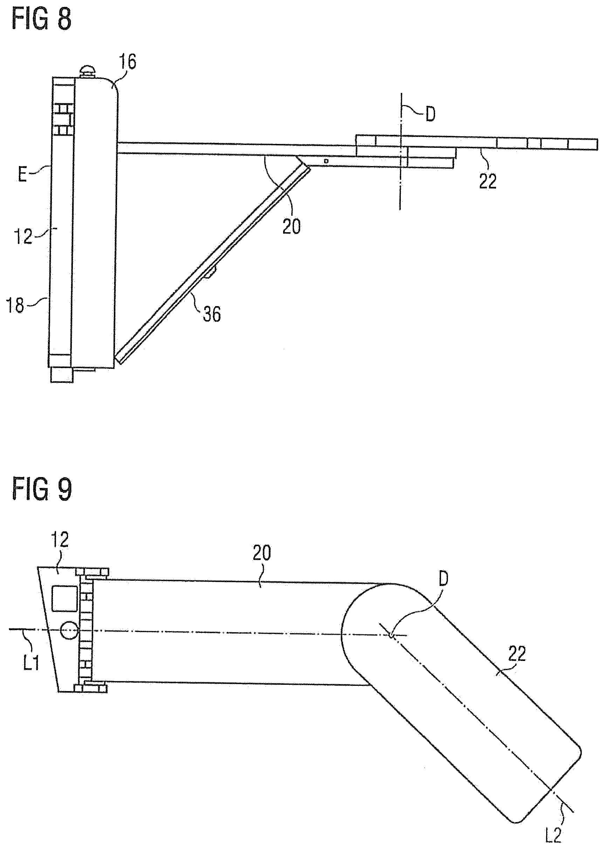

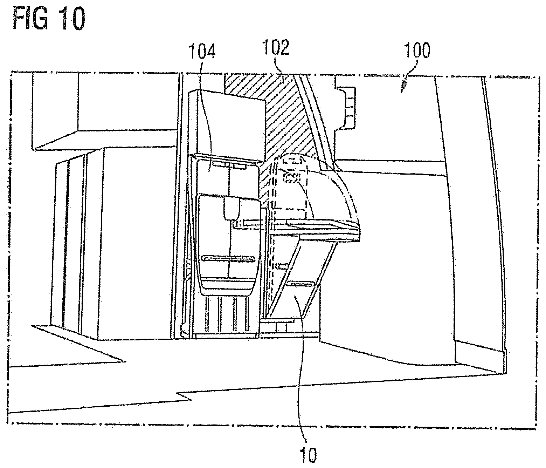

In den Figuren 1 bis 9 ist eine Tischanordnung 10 in verschiedenen Betriebszuständen gezeigt. Wie insbesondere in Figur 10 zu erkennen ist, ist die Tischanordnung 10 dazu vorgesehen, in einem Passagierkabinenbereich, insbesondere einem Flugzeugpassagierkabinenbereich 100 verbaut zu werden. Die Tischanordnung 10 umfasst ein Montageelement 12, das an einem in dem Flugzeugpassagierkabinenbereich 100 installierten Befestigungsstrukturelement 102 befestigbar ist. Bei dem in Figur 10 veranschaulichten Flugzeugpassagierkabinenbereich 100 ist das Befestigungsstrukturelement 102 in Form einer Flugzeugbordküche ausgebildet, d.h. das Montageelement 12 ist an einer Seitenwand der Flugzeugbordküche befestigt. Alternativ dazu ist jedoch auch möglich, das Montageelement 12 und damit die Tischanordnung 10 an einem in Form einer Trennwand, in Form eines Toilettenmoduls in Form eines Stauschranks oder in Form eines vergleichbaren Monuments ausgebildeten Befestigungsstrukturelement 102 zu fixieren. Benachbart zu der Tischanordnung 10 ist an dem Befestigungsstrukturelement 102 ein Flugbegleitersitz 104 befestigt.

Wie am besten in den Figuren 2 und 4 bis 7 zu erkennen ist, umfasst das Montageelement 12 zwei Seitenwände 14, 16, die sich im Wesentlichen parallel zueinander erstrecken. Die Seitenwände 14, 16 sind durch eine Rückwand 18 miteinander verbunden. Zur Befestigung des Montageelements 12 an dem Befestigungsstrukturelement 102 wird die Rückwand 18 des Montageelements 12 beispielsweise durch Schrauben, Nieten oder vergleichbare Befestigungselemente an dem Befestigungsstrukturelement 102 fixiert. Das Montageelement 12 definiert somit eine Montageebene E, die sich im Wesentlichen senkrecht zu den Seitenwänden 14, 16 des Montageelements 12 erstreckt. Die Rückwand 18 des Montageelements 12 erstreckt sich dagegen in der Montageebene E.

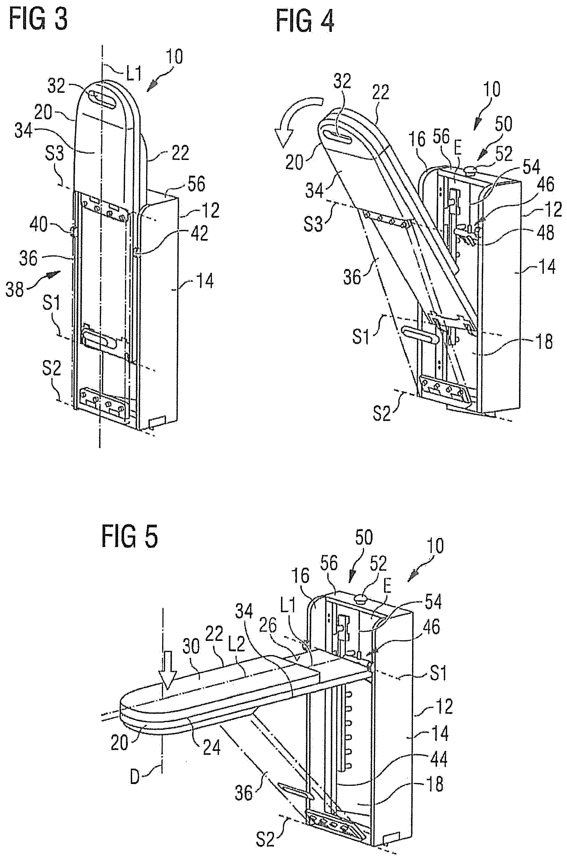

Ferner umfasst die Tischanordnung 10 ein mit dem Montageelement 12 verbundenes erstes Tischelement 20. Das erste Tischelement 20 ist relativ zu dem Montageelement 12 um eine erste Schwenkachse S1 zwischen einer in den Figuren 1 bis 3 gezeigten Verstauposition und einer in den Figuren 5 bis 9 veranschaulichten Nutzungsposition verschwenkbar. Die erste Schwenkachse S1 erstreckt sich im Wesentlichen parallel zu der durch das Montageelement 10 definierten Montageebene E.

In seiner Verstauposition ist das erste Tischelement 20 im Wesentlichen parallel zu der durch das Montageelement 12 definierten Montageebene E angeordnet. Ein in seiner Nutzungsposition angeordnetes erstes Tischelement 20 erstreckt sich dagegen im Wesentlichen senkrecht zu der durch das Montageelement 12 definierten Montageebene E.

Das erste Tischelement 20 ist so geformt, dass seine Abmessung in Richtung seiner Mittenlängsachse L1 größer ist als seine Abmessung in einer Richtung senkrecht zu seiner Mittenlängsachse L1. Wenn das erste Tischelement 20 in seiner Verstauposition angeordnet ist, erstreckt sich die Mittenlängsachse L1 des ersten Tischelements im Wesentlichen parallel zu der durch das Montageelement 12 definierten Montageebene E. Wenn das erste Tischelement 20 dagegen in seiner Nutzungsposition angeordnet ist, erstreckt sich die Mittenlängsachse L1 des ersten Tischelements 20 im Wesentlichen senkrecht zu der durch das Montageelement 12 definierten Montageebene E.

Die Tischanordnung 10 umfasst ferner ein mit dem ersten Tischelement 20 verbundenes zweites Tischelement 22. Insbesondere ist das zweite Tischelement 22 im Bereich eines von der ersten Schwenkachse S1 abgewandten Endes des ersten Tischelements 20 mit dem ersten Tischelement 20 verbunden. Die Drehachse D ist ebenfalls im Bereich eines von der ersten Schwenkachse S1 abgewandten Endes des ersten Tischelements 20 angeordnet. Bei der in den Figuren veranschaulichten Ausführungsform einer Tischanordnung 10 ist das von der ersten Schwenkachse S1 abgewandte Ende des ersten Tischelements 20 welches mit dem zweiten Tischelement 22 verbunden ist, abgerundet ausgebildet. Ein mit dem ersten Tischelement 20 verbundenes Ende des zweiten Tischelements 22 ist ebenfalls abgerundet ausgebildet. Im Gegensatz dazu weist ein freies Ende des zweiten Tischelements 22 eine gerade Kante auf.

Das zweite Tischelement 22 erstreckt sich im Wesentlichen parallel zu dem ersten Tischelement 20 und ist relativ zu dem ersten Tischelement 20 insbesondere derart angeordnet, dass eine Unterseite 24 des zweiten Tischelements 22 einer Tischfläche 26 des ersten Tischelements 20 zugewandt ist. Ähnlich wie das erste Tischelement 20 ist auch das zweite Tischelement 22 so geformt, dass seine Abmessung in Richtung seiner Mittenlängsachse L2 größer ist als seine Abmessung in einer Richtung senkrecht zu seiner Mittenlängsachse L2.

Das zweite Tischelement 22 ist gemeinsam mit dem ersten Tischelement 20 um die erste Schwenkachse S1 verschwenkbar. D.h., wenn sich das erste Tischelement 20 in seiner Verstauposition befindet, in der sich das erste Tischelement 20 im Wesentlichen parallel zu der durch das Montageelement 12 definierten Montageebene E erstreckt, erstreckt sich das zweite Tischelement 22 ebenfalls im Wesentlichen parallel zu der Montageebene E. Die Mittenlängsachse L2 des zweiten Tischelements 22 erstreckt sich dann, ebenso wie die Mittenlängsachse L1 des ersten Tischelements 20, im Wesentlichen parallel zu der Montageebene E. Wenn sich das erste Tischelement 20 dagegen in seiner Nutzungsposition befindet, in der sich das erste Tischelement 20 im Wesentlichen senkrecht zu der durch das Montageelement 12 definierten Montageebene E erstreckt, erstreckt sich das zweite Tischelement 22 ebenfalls im Wesentlichen senkrecht zu der Montageebene E.

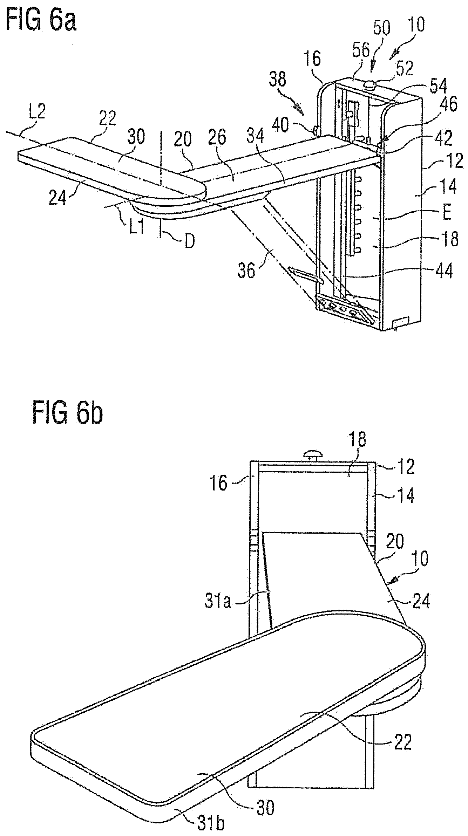

Wie am besten aus einem Vergleich der Figur 5 mit den Figuren 6 bis 9 deutlich wird, ist das zweite Tischelement 22 relativ zu dem ersten Element 20 um eine Drehachse D drehbar. Die Drehachse D ist in der Nutzungsposition der Tischelemente 20, 22 parallel zur Montageebene (E) angeordnet. Sie schneidet die beiden Mittenlängsachsen L1, L2 in einem Kreuzungspunkt und steht senkrecht auf diesen. Insbesondere kann das zweite Tischelement 22 relativ zu dem ersten Tischelement 20 um die Drehachse D zwischen einer in Figur 5 gezeigten Überlagerungsposition und einer in den Figuren 6 bis 9 veranschaulichten Arbeitsposition gedreht werden.

Darüber hinaus ist das zweite Tischelement 22, zumindest dann, wenn das erste Tischelement 20 in seiner Verstauposition angeordnet ist, relativ zu dem ersten Tischelement 20 in einer Richtung parallel zu der Längsachse L1 des ersten Tischelements 20 und der Längsachse L2 des zweiten Tischelements 20 verschiebbar. Insbesondere ist das zweite Tischelement 22 derart mit dem ersten Tischelement 20 verbunden, dass es relativ zu dem ersten Tischelement 20 in Richtung der ersten Schwenkachse S1 parallel zu der Längsachse L1 des ersten Tischelements 20 und der Längsachse L2 des zweiten Tischelements 22 verschiebbar ist, wenn das erste Tischelement 20 in seiner Verstauposition angeordnet ist. Dadurch ragt das in seiner Verstauposition angeordnete erste Tischelement 20 weiter nach oben aus dem Montagelement 12 heraus als das zweite Tischelement 22, siehe Figuren 2 und 3.

Wenn das zweite Tischelement 22 relativ zu dem ersten Tischelement 20 in seiner Überlagerungsposition angeordnet ist, sind das erste und das zweite Tischelement 20, 22 in einer einander maximal überlagernden Position angeordnet, d.h. eine Fläche, um die eines der beiden Tischelemente das andere Tischelement überragt, ist minimiert. Bei der in den Figuren veranschaulichten Ausführungsform einer Tischanordnung 10 hat das zweite Tischelement 22 eine geringere Fläche als das erste Tischelement 20. Insbesondere weist das zweite Tischelement 22 in Richtung seiner Mittenlängsachse L2 eine kürzere Abmessung auf als das erste Tischelement 20 in Richtung seiner Mittenlängsachse L1.

Im Übrigen ist das zweite Tischelement 22 jedoch kongruent zu einem Abschnitt des ersten Tischelements 20 ausgebildet, d.h. das zweite Tischelement 22 ist so geformt, dass es einen Abschnitt des ersten Tischelements 20 vollständig überlagert, wenn es relativ zu dem ersten Tischelement 20 in seiner Überlagerungsposition angeordnet ist. Der kongruent zu dem zweiten Tischelement 22 ausgebildete Abschnitt des ersten Tischelements 20 bildet einen von der ersten Schwenkachse S1 abgewandten Abschnitt des ersten Tischelements 20, so dass lediglich ein zu der ersten Schwenkachse S1 benachbarter Abschnitt des ersten Tischelements 20 nicht von dem zweiten Tischelement 22 überdeckt wird, wenn das zweite Tischelement 22 relativ zu dem ersten Tischelement 20 in seine Überlagerungsposition angeordnet ist.

Wenn sich das erste Tischelement 20 in seiner Verstauposition befindet, ist das zweite Tischelement 22 relativ zu dem ersten Tischelement 20 stets in seiner Überlagerungsposition angeordnet, um den Platzbedarf der Tischanordnung 10 zu minimieren, siehe Figuren 1 bis 3. Wenn sich das erste Tischelement 20 dagegen in seiner Nutzungsposition befindet, kann das zweite Tischelement 22 in seiner in Figur 5 gezeigten Überlagerungsposition verbleiben, in der sich die Mittenlängsachse L2 des zweiten Tischelements 22 im Wesentlichen parallel zu der Mittenlängsachse L 1 des ersten Tischelements 20 und im Wesentlichen senkrecht zu der Montageebene E erstreckt. Das zweite Tischelement 22 kann jedoch auch um die Drehachse D relativ zu dem ersten Tischelement 20 in seine in den Figuren 6 bis 9 veranschaulichte Arbeitsposition gedreht werden.

Wenn sich das zweite Tischelement 22 in seiner Arbeitsposition befindet, bildet die Mittenlängsachse L1 des ersten Tischelements 20 mit der Mittenlängsachse L2 des zweiten Tischelements 22 einen Winkel von ca. 80 bis 120°, insbesondere einen Winkel von ca. 90 bis 110°. Dadurch wird für eine auf dem Flugbegleitersitz 104 sitzende Person ein komfortabler Arbeitsplatz mit zwei "Tischschenkeln" geschaffen.

In den Figuren gezeigten Ausführungsform einer Tischanordnung 10 sind das erste Tischelement 20 und das zweite Tischelement 22 so dimensioniert, dass ein Nutzer der Tischanordnung 10 drei DIN A4 Blätter auf dem ersten Tischelement 20 und dem zweiten Tischelement 22 ablegen kann. Insbesondere ist die Tischfläche 26 des ersten Tischelements 20 rutschhemmend ausgebildet und zur Aufnahme von zwei DIN A4 Blättern im Querformat geeignet, während eine ebenfalls rutschhemmend ausgebildete Tischfläche 30 des zweiten Tischelements 22 zur Aufnahme von einem DIN A4 Blatt im Querformat geeignet ist.

Wie am Besten in Figur 6b zu erkennen ist, ist das erste Tischelement 20 mit einem ersten Kantenschutzprofil 31a versehen, das sich entlang des gesamten Umfangsrands des ersten Tischelements 20 erstreckt und damit eine durchgängige Umrandung der Tischfläche 26 des ersten Tischelements 20 bildet. Entsprechend ist das zweite Tischelement 22 mit einem zweiten Kantenschutzprofil 31b versehen, das sich entlang des gesamten Umfangsrands des zweiten Tischelements 22 erstreckt und damit eine durchgängige Umrandung der Tischfläche 30 des zweiten Tischelements 22 bildet. Die Kantenschutzprofile 31a, 31b bestehen jeweils aus einem geeigneten Kunststoffmaterial und schützen Randbereiche der Tischelemente 20, 22 vor Beschädigungen.

Ferner ragt das erste Kantenschutzprofil 31a in einer Richtung parallel zu der Drehachse D über die Tischfläche 26 des ersten Tischelements 20 hinaus, während das zweite Kantenschutzprofil 31b in einer Richtung parallel zu der Drehachse D über die Tischfläche 30 des zweiten Tischelements 22 hinausragt. Die Kantenschutzprofile 31a, 31b verhindern somit, dass verschüttete Flüssigkeiten ungehindert von den Tischflächen 26, 30 der Tischelemente 20, 22 tropfen und sichern auf den Tischflächen 26, 30 abgelegte Gegenstände, wie z.B. Papiere zumindest bis zu einem gewissen Grad gegen Herunterrutschen.

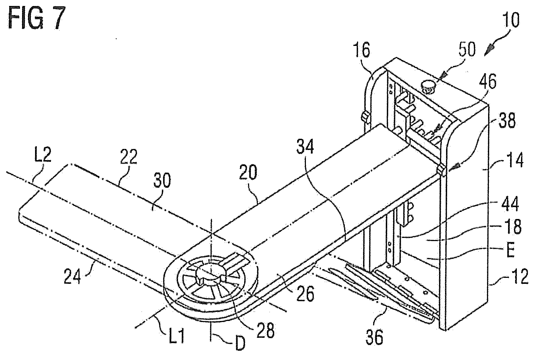

Im Bereich der Drehachse D ist ein in Figur 7 veranschaulichtes Reibungskrafterzeugungselement 28 vorgesehen, das dazu eingerichtet ist, eine unerwünschte Bewegung des zweiten Tischelements 22 relativ zu dem ersten Tischelement 20 um die Drehachse D zu minimieren. Dies ist insbesondere dann wichtig, wenn die Tischanordnung 10, wie in Figur 10 gezeigt, in einer Flugzeugpassagierkabine verbaut ist und im Flugbetrieb genutzt werden soll. Insbesondere ist das Reibungskrafterzeugungselement 28 im Bereich der Drehachse D zwischen dem ersten Tischelement 20 und dem zweiten Tischelement 22 angeordnet und kann beispielsweise aus einem Kunststoffmaterial, einem Elastomermaterial oder dergleichen bestehen.

Das Reibungskrafterzeugungselement 28 ist hier so gestaltet, dass es eine konstante, bleibende Reibungskraft erzeugt, die bei der Montage der Tischanordnung 10, mittels einer Schraube oder dergleichen eingestellt wird. Das Reibungskrafterzeugungselement 28 kann aber auch so gestaltet sein, dass die von ihm aufgebrachte Reibungskraft variabel und manuell einstellbar ist. Ein Nutzer der Tischanordnung 10 kann dann beispielsweise zunächst bei deaktiviertem Reibungskrafterzeugungselement 28 das zweite Tischelement 22 aus seiner Überlagerungsposition um die Drehachse D in seine Arbeitsposition drehen und anschließend das Reibungskrafterzeugungselement 28 aktivieren, um das zweite Tischelement 22 in seiner Arbeitsposition relativ zu dem ersten Tischelement 20 zu halten.

Wie am besten in den Figuren 1, 3 und 4 zu sehen ist, ist an dem ersten Tischelement 20 ein Handgriff 32 ausgebildet. Insbesondere ist der Handgriff 32 im Bereich des von der ersten Schwenkachse S1 abgewandten Endes des ersten Tischelements 20 angeordnet und in Form einer Mulde ausgebildet die in eine der Tischfläche 26 des ersten Tischelements 20 gegenüberliegende Unterseite 34 des ersten Tischelements 20 eingeformt ist. Der Handgriff 32 kann von einem Benutzer gegriffen werden, wenn das erste Tischelement 20 gemeinsam mit dem zweiten Tischelement 22 zwischen seiner Verstauposition und seiner Nutzungsposition verschwenkt werden soll.

Die Tischanordnung 10 umfasst ferner ein Stützelement 36, dessen erstes Ende um eine zweite Schwenkachse S2 schwenkbar mit dem Montageelement 12 verbunden ist. Die zweite Schwenkachse S2 erstreckt sich im Wesentlichen parallel zu der ersten Schwenkachse S1 und parallel zu der durch das Montageelement 12 definierten Montageebene E. Wenn die Tischanordnung 10, wie in Figur 10 gezeigt, in dem Flugzeugpassagierkabinenbereich 100 montiert ist, ist die zweite Schwenkachse S2 in einem bodennahen Bereich des Montageelements 12 an dem Montageelement 12 fixiert.

Ein zweites Ende des Stützelements 36 ist dagegen um eine dritte Schwenkachse S3 schwenkbar mit dem ersten Tischelement 20 verbunden. Insbesondere ist das zweite Ende des Stützelements 36 mit der Unterseite 34 des ersten Tischelements 20 verbunden, so dass das Stützelement 36 relativ zu dem Montageelement 12 und dem ersten Tischelement 20 zwischen einer in den Figuren 1 und 3 veranschaulichte Ruheposition und einer in den Figuren 5 bis 9 gezeigten Stützposition verschwenkbar ist. In seiner Ruheposition, die das Stützelement 36 einnimmt, wenn sich das erste Tischelement 20 in seiner Verstauposition befindet, ist das Stützelement 36 im Wesentlichen parallel zu dem ersten Tischelement 20 angeordnet. In seiner Stützposition, die das Stützelement 36 einnimmt, wenn sich das erste Tischelement 20 in seiner Nutzungsposition befindet, bildet dagegen die Längsachse L1 des ersten Tischelements 20 mit einer Längsachse L3 des Stützelements 36 einen Winkel von ca. 45°.

Das Stützelement 36 verleiht dem ersten Tischelement 20 eine erhöhte Tragfähigkeit, so dass das erste Tischelement 20 belastbarer ist als das zweite Tischelement 22. Die Tischanordnung 10 ist in der hier gezeigten Ausführungsform generell mit 5 kg belastbar.

Die Tischanordnung 10 umfasst einen Sicherungsmechanismus 38 zur Sicherung des ersten Tischelements 20 in seiner Verstauposition. Der Sicherungsmechanismus 38 umfasst zwei Sicherungshebel 40, 42, die jeweils um eine Drehachse drehbar an den Seitenwänden 14, 16 des Montageelements 12 angebracht sind. Wenn sich die Sicherungshebel 40, 42 in einer Sicherungsposition befinden, liegen sie an einander gegenüberliegenden Randabschnitten des sich in seiner Ruheposition angeordneten Stützelements 36 an und halten dadurch das Stützelement 36 in seiner Ruheposition, siehe insbesondere Figur 1. Dadurch wird auch das erste Tischelement 20 in seiner Verstauposition gehalten. Wenn sich die Sicherungshebel 40, 42 dagegen in einer Freigabeposition befinden, geben sie das Stützelement 36 und folglich das erste Tischelement 20 frei, so dass das Stützelement 36 in seine Stützposition bewegt werden kann, während das erste Tischelement 20 in seine Nutzungsposition bewegt werden kann, siehe insbesondere Figuren 3 bis 5.

Wie am besten aus einem Vergleich der Figuren 3 bis 5 deutlich wird, ist die erste Schwenkachse S1 bei einer Überführung des ersten Tischelements 20 zwischen seiner Verstauposition und seiner Nutzungsposition relativ zu dem Montageelement 12 zwischen einer in Figur 3 gezeigten Ruheposition und einer in Figur 5 veranschaulichte Betriebsposition bewegbar. Bei der Bewegung der ersten Schwenkachse S1 relativ zu dem Montageelement 12 handelt es sich um eine translatorische Bewegung der ersten Schwenkachse S1 in der durch das Montageelement 12 definierten Montageebene E. Bei einer Überführung des ersten Tischelements 20 zwischen seiner Verstauposition und seiner Nutzungsposition führt folglich das der ersten Schwenkachse S1 zugewandte Ende des ersten Tischelements 20 nicht nur eine Schwenkbewegung um die erste Schwenkachse S1, sondern auch eine translatorische Bewegung in der Montageebene E aus.

Die translatorische Bewegung der ersten Schwenkachse S1 in der Montageebene E wird durch eine Führungseinrichtung 44 geführt. Die Führungseinrichtung 44 umfasst zwei zueinander im Wesentlichen parallele Führungsschienen, in denen jeweils ein Ende der ersten Schwenkachse S1 verschiebbar aufgenommen ist. Die Führungseinrichtung 44, d.h. die Führungsschienen der Führungseinrichtung 44 ist/sind an dem Montageelement 12 befestigt.

Wenn die Tischanordnung 10, wie in Figur 10 gezeigt, betriebsbereit an dem Befestigungsstrukturelement 102 montiert ist, wird die erste Schwenkachse S1 bei einer Überführung des ersten Tischelements 20 aus seiner Verstauposition in seine Nutzungsposition in der Montageebene E relativ zu dem Montageelement 12 nach oben verschoben. Umgekehrt wird die erste Schwenkachse S1 bei einer Überführung des ersten Tischelements 20 aus seiner Nutzungsposition in seine Verstauposition in der Montageebene E relativ zu dem Montageelement 12 nach unten verschoben.

Darüber hinaus umfasst die Tischanordnung 10 einen Arretierungsmechanismus 46 zur Arretierung des ersten Tischelements 20 in seiner Nutzungsposition. Der Arretierungsmechanismus 46 umfasst ein mit dem Montageelement 12 verbundenes erstes Arretierelement 48, siehe insbesondere Figur 4. Ferner umfasst der Arretierungsmechanismus 46 ein zu dem ersten Arretierelement 48 komplementäres und mit dem ersten Tischelement 20 verbundenes zweites Arretierelement (in den Figuren nicht zu erkennen), das im Bereich des der ersten Schwenkachse S1 zugewandten Endes des ersten Tischelements 20 an dem ersten Tischelement 20 angebracht ist.

Der Arretierungsmechanismus 46 ist so ausgestaltet, dass er durch Aufbringen einer Drucckraft (veranschaulicht durch den Pfeil in Figur 5) auf die Tischfläche 26 des sich in seiner Nutzungsposition angeordneten ersten Tischelements 20 aktivierbar ist. Insbesondere sind das erste und das zweite Arretierelement 48 des Arretierungsmechanismus 46 so angeordnet und konstruiert, dass sie automatisch miteinander in Eingriff gelangen, sobald ein Nutzer eine entsprechende Druckkraft auf die Tischfläche 26 des sich in seiner Nutzungsposition angeordneten ersten Tischelements 20 aufbringt. In der in der Figur 5 gezeigten Anordnung, bei der das erste Tischelement 20 noch von dem zweiten Tischelement 20 überlagert wird, wird die Druckkraft zur Aktivierung des Arretierungsmechanismus 46 über die Tischfläche 30 des zweiten Tischelements 22 auf die Tischfläche 26 des ersten Tischelements 20 übertragen.

Ferner ist der Arretierungsmechanismus 46 so ausgestaltet, dass seine Aktivierung mit einem hörbaren Geräusch verbunden ist. Insbesondere sind das erste und das zweite Arretierelement 48 des Arretierungsmechanismus 46 so konstruiert, dass ein Klickgeräusch zu hören ist, wenn die beiden Arretierelemente 48 miteinander in Eingriff gelangen.

Schließlich umfasst die Tischanordnung 10 einen manuell betätigbaren Lösemechanismus 50 zur Lösung des Arretierungsmechanismus 46. Der Lösemechanismus 50 ist an dem Montageelement befestigt und umfasst einen Betätigungsknopf 52, der über ein Verbindungselement 54 mit dem ersten Arretierelement 48 des Arretierungsmechanismus 46 in Verbindung steht. Der Betätigungsknopf 52 ist an einem Halteelement 56 befestigt, das sich zwischen den beiden Seitenwänden 14, 16 des Montageelements 12 erstreckt. Wenn auf den Betätigungsknopf 52 eine manuelle Druckkraft ausgeübt wird, wird diese Druckkraft über das Verbindungselement 54 an das erste Arretierelement 48 übertragen. Dadurch wird das erste Arretierelement 48 von dem zweiten Arretierelement gelöst, so dass das erste Tischelement 20 aus seiner Nutzungsposition in seine Verstauposition verschwenkt werden kann.

## Patentansprüche

1. Tischanordnung (10) für ein Flugzeug mit:
- einem Montageelement (12), das an einem Befestigungsstrukturelement (102) befestigbar ist und eine Montageebene (E) definiert,
- einem mit dem Montageelement (12) verbundenen ersten Tischelement (20), wobei das erste Tischelement (20) relativ zu dem Montageelement (12) um eine erste Schwenkachse (S1) zwischen einer Verstauposition, in der sich das erste Tischelement (20) und dessen Mittenlängsachse (L1) im Wesentlichen parallel zu der durch das Montageelement (12) definierten Montageebene (E) erstreckt, und einer Nutzungsposition, in der sich das erste Tischelement (20) und dessen Mittenlängsachse (L1) im Wesentlichen senkrecht zu der durch das Montageelement (12) definierten Montageebene (E) erstreckt, verschwenkbar ist, und
- einem mit dem ersten Tischelement (20) verbundenen zweiten Tischelement (22), wobei das zweite Tischelement (22) im Wesentlichen parallel zu dem ersten Tischelement (20) angeordnet und relativ zu dem ersten Tischelement (20) um eine Drehachse (D) drehbar ist, welche in der Nutzungsposition parallel zur Montageebene (E) angeordnet ist, wobei die erste Schwenkachse (S1) bei einer Überführung des ersten Tischelements (20) zwischen seiner Verstauposition und seiner Nutzungsposition relativ zu dem Montageelement (12) zwischen einer Ruheposition und einer Betriebsposition bewegbar ist,
**dadurch gekennzeichnet, dass**
- die Drehachse (D) in der Verstauposition senkrecht zur Montageebene (E) angeordnet ist und
- das zweite Tischelement (22), zumindest dann, wenn das erste Tischelement (20) in seiner Verstauposition angeordnet ist, relativ zu dem ersten Tischelement (20) in einer Richtung parallel zur Mittenlängsachse (L1) des ersten Tischelements (20) und der Längsachse (L2) des zweiten Tischelements (22) verschiebbar ist.

2. Tischanordnung (10) nach Anspruch 1,
wobei das zweite Tischelement (22) im Bereich eines von der ersten Schwenkachse (S1) abgewandten Endes des ersten Tischelements (20) mit dem ersten Tischelement (20) verbunden ist und/oder wobei im Bereich der Drehachse (D) ein Reibungskrafterzeugungselement (28) vorgesehen ist, das dazu eingerichtet ist, eine unerwünschte Bewegung des zweiten Tischelements (22) relativ zu dem ersten Tischelement (20) um die Drehachse (D) zu minimieren.

3. Tischanordnung (10) nach Anspruch 1 oder 2,
wobei das zweite Tischelement (22) relativ zu dem ersten Tischelement (20) um die Drehachse (D) zwischen einer Überlagerungsposition, in der das erste und das zweite Tischelement (22) in einer einander maximal überlagernden Position angeordnet sind, und einer Arbeitsposition, in der die Längsachse (L1) des ersten Tischelements (20) mit der Längsachse (L2) des zweiten Tischelements (22) einen Winkel von ca. 80 bis 120°, insbesondere einen Winkel von ca. 90 bis 110° bildet, drehbar ist.

4. Tischanordnung (10) nach einem der Ansprüche 1 bis 3,
wobei:
- das zweite Tischelement (22) eine geringere Fläche hat als das erste Tischelement (20) und/oder
- das zweite Tischelement (22) kongruent zu einem Abschnitt des ersten Tischelements (20) ausgebildet ist und/oder
- das erste Tischelement (20) mit einem ersten Kantenschutzprofil (31a) versehen ist, das sich entlang zumindest eines Abschnitts eines Umfangsrands des ersten Tischelements (20) erstreckt und/oder in einer Richtung parallel zu der Drehachse (D) über eine Tischfläche (26) des ersten Tischelements (20) hinaus ragt; und/oder
- das zweite Tischelement (22) mit einem zweiten Kantenschutzprofil (31b) versehen ist, das sich entlang zumindest eines Abschnitts eines Umfangsrands des zweiten Tischelements (22) erstreckt und/oder in einer Richtung parallel zu der Drehachse (D) über eine Tischfläche (30) des zweiten Tischelements (22) hinaus ragt; und/oder
- die Tischfläche (26) des ersten Tischelements (20) rutschhemmend ausgebildet ist; und/oder
- die Tischfläche (30) des zweiten Tischelements (22) rutschhemmend ausgebildet ist.

5. Tischanordnung (10) nach einem der Ansprüche 1 bis 4,
wobei das zweite Tischelement (22) derart relativ zu dem ersten Tischelement (20) angeordnet ist, dass eine Unterseite (24) des zweiten Tischelements (22) einer Tischfläche (26) des ersten Tischelements (20) zugewandt ist, und/oder wobei das erste Tischelement (20) und das zweite Tischelement (22) so dimensioniert sind, dass ein Nutzer der Tischanordnung (10) drei DIN A4 Blätter auf dem ersten Tischelement (20) und dem zweiten Tischelement (22) ablegen kann, und/oder wobei das erste Tischelement (20) so geformt ist, dass seine Abmessung in Richtung seiner Längsachse (L1) größer ist als seine Abmessung in einer Richtung senkrecht zu seiner Längsachse (L1), und/oder wobei das zweite Tischelement (22) so geformt ist, dass seine Abmessung in Richtung seiner Längsachse (L2) größer ist als seine Abmessung in einer Richtung senkrecht zu seiner Längsachse (L2), und/oder wobei an dem ersten Tischelement (20) ein Handgriff (32) ausgebildet ist.

6. Tischanordnung (10) nach einem der Ansprüche 1 bis 5,
die ferner eine Führungseinrichtung (44) zur Führung der Bewegung der ersten Schwenkachse (S1) zwischen ihrer Ruheposition und ihrer Betriebsposition umfasst.

7. Tischanordnung (10) nach einem der Ansprüche 1 bis 6,
wobei das Montageelement (12) zwei Seitenwände (14, 16) umfasst, die sich im Wesentlichen senkrecht zu der durch das Montageelement (12) definierten Montageebene (E) und/oder im Wesentlichen parallel zueinander erstrecken, und/oder wobei das Montageelement (12) eine Rückwand (18) umfasst, die sich im Wesentlichen in der durch das Montageelement (12) definierten Montageebene (E) erstreckt.

8. Tischanordnung (10) nach einem der Ansprüche 1 bis 7,
die ferner einen Arretierungsmechanismus (46) zur Arretierung des ersten Tischelements (20) in seiner Nutzungsposition umfasst.

9. Tischanordnung (10) nach Anspruch 8,
wobei der Arretierungsmechanismus (46) so ausgestaltet ist, dass er durch Aufbringen einer Druckkraft auf eine Tischfläche (26) des in seiner Nutzungsposition angeordneten ersten Tischelements (20) aktivierbar ist, und/oder wobei der Arretierungsmechanismus (46) so ausgestaltet ist, dass seine Aktivierung mit einem hörbaren Geräusch verbunden ist.

10. Tischanordnung (10) nach Anspruch 8 oder 9,
die ferner einen manuell betätigbaren Lösemechanismus (50) zur Lösung des Arretierungsmechanismus (46) umfasst.

11. Tischanordnung (10) nach einem der Ansprüche 1 bis 10,
die ferner ein Stützelement (36) umfasst, dessen erstes Ende um eine zweite Schwenkachse (S2) schwenkbar mit dem Montageelement (12) verbunden ist und dessen zweites Ende um eine dritte Schwenkachse (S3) schwenkbar mit dem ersten Tischelement (20) verbunden ist, so dass das Stützelement (36) relativ zu dem Montageelement (12) und dem ersten Tischelement (20) zwischen einer Ruheposition, in der das Stützelement (36) im Wesentlichen parallel zu dem ersten Tischelement (20) angeordnet ist, und einer Stützposition, in der eine Längsachse (L1) des ersten Tischelements (20) mit einer Längsachse (L3) des Stützelements (36) einen Winkel von ca. 30 bis 60°, insbesondere einen Winkel von ca. 40 bis 50°, und insbesondere bevorzugt einen Winkel von ca. 45° bildet, verschwenkbar ist.

12. Tischanordnung (10) nach einem der Ansprüche 1 bis 11,
die ferner einen Sicherungsmechanismus (38) zur Sicherung des ersten Tischelements (20) in seiner Verstauposition umfasst.

13. Passagierkabinenbereich (100), der umfasst:
- ein Befestigungsstrukturelement (102) und
- eine Tischanordnung (10) nach einem der Ansprüche 1 bis 12, wobei das Montageelement (12) der Tischanordnung (10) an dem Befestigungsstrukturelement (102) befestigt ist.

14. Passagierkabinenbereich (100) nach Anspruch 13,
wobei an dem Befestigungsstrukturelement (102) benachbart zu der Tischanordnung (10) ein Flugbegleitersitz (104) befestigt ist.

## Claims

1. Table arrangement (10) for an aircraft having:
- a mounting element (12) which can be fastened to a fastening structural element (102) and defines a mounting plane (E),
- a first table element (20) connected to the mounting element (12), wherein the first table element (20) can be pivoted relative to the mounting element (12) about a first pivot axis (S1) between a stowage position, in which the first table element (20) and its centre longitudinal axis (L1) extend substantially parallel to the mounting plane (E) defined by the mounting element (12), and a use position, in which the first table element (20) and its centre longitudinal axis (L1) extend substantially perpendicularly with respect to the mounting plane (E) defined by the mounting element (12), and
- a second table element (22) connected to the first table element (20), wherein the second table element (22) is arranged substantially parallel to the first table element (20) and can be rotated relative to the first table element (20) about a rotational axis (D) which, in the use position, is arranged parallel to the mounting plane (E), wherein the first pivot axis (S1) can be moved between a rest position and an operating position in the case of a transfer of the first table element (20) between its stowage position and its use position relative to the mounting element (12),
**characterized in that**
- the rotational axis (D) is arranged, in the stowage position, perpendicularly with respect to the mounting plane (E), and
- the second table element (22), at least when the first table element (20) is arranged in its stowage position, can be displaced relative to the first table element (20) in a direction parallel to the centre longitudinal axis (L1) of the first table element (20) and the longitudinal axis (L2) of the second table element (22).

2. Table arrangement (10) according to Claim 1, wherein the second table element (22) is connected to the first table element (20) in the region of one end of the first table element (20) facing away from the first pivot axis (S1) and/or wherein, in the region of the rotational axis (D), a frictional force generating element (28) is provided which is configured to minimize an unwanted movement of the second table element (22) relative to the first table element (20) about the rotational axis (D).

3. Table arrangement (10) according to Claim 1 or 2, wherein the second table element (22) can be rotated relative to the first table element (20) about the rotational axis (D) between a superimposed position, in which the first and the second table element (22) are arranged in a maximum superimposed position with respect to each other, and a working position, in which the longitudinal axis (L1) of the first table element (20) forms, with the longitudinal axis (L2) of the second table element (22), an angle of approximately 80 to 120°, in particular an angle of approximately 90 to 110°.

4. Table arrangement (10) according to one of Claims 1 to 3,
wherein:
- the second table element (22) has a smaller surface area than the first table element (20), and/or
- the second table element (22) is of congruent configuration with respect to a portion of the first table element (20), and/or
- the first table element (20) is provided with a first edge protection profile (31a) which extends along at least one portion of a peripheral edge of the first table element (20) and/or projects in a direction parallel to the rotational axis (D) above a table surface (26) of the first table element (20); and/or
- the second table element (22) is provided with a second edge protection profile (31b) which extends along at least one portion of a peripheral edge of the second table element (22) and/or projects in a direction parallel to the rotational axis (D) above a table surface (30) of the second table element (22); and/or
- the table surface (26) of the first table element (20) is designed to prevent slipping; and/or
- the table surface (30) of the second table element (22) is designed to prevent slipping.

5. Table arrangement (10) according to one of Claims 1 to 4,
wherein the second table element (22) is arranged relative to the first table element (20) in such a way that a lower side (24) of the second table element (22) is facing a table surface (26) of the first table element (20), and/or wherein the first table element (20) and the second table element (22) are dimensioned in such a way that a user of the table arrangement (10) can place three DIN A4 sheets on the first table element (20) and the second table element (22), and/or wherein the first table element (20) is shaped in such a way that its dimension in the direction of its longitudinal axis (L1) is greater than its dimension in a direction perpendicular with respect to its longitudinal axis (L1), and/or wherein the second table element (22) is shaped in such a way that its dimension in the direction of its longitudinal axis (L2) is greater than its dimension in a direction perpendicular with respect to its longitudinal axis (L2), and/or wherein a handle (32) is formed on the first table element (20).

6. Table arrangement (10) according to one of Claims 1 to 5,
further comprising a guide device (44) for guiding the movement of the first pivot axis (S1) between its rest position and its operating position.

7. Table arrangement (10) according to one of Claims 1 to 6,
wherein the mounting element (12) comprises two side walls (14, 16) which extend substantially perpendicularly with respect to the mounting plane (E) defined by the mounting element (12) and/or substantially parallel to each other, and/or wherein the mounting element (12) comprises a rear wall (18) which extends substantially in the mounting plane (E) defined by the mounting element (12).

8. Table arrangement (10) according to one of Claims 1 to 7,
which further comprises a locking mechanism (46) for locking the first table element (20) in its use position.

9. Table arrangement (10) according to Claim 8,
wherein the locking mechanism (46) is designed in such a way that it can be activated by applying a pressure force to a table surface (26) of the first table element (20) arranged in its use position, and/or wherein the locking mechanism (46) is designed in such a way that its activation is linked to an audible noise.

10. Table arrangement (10) according to Claim 8 or 9, further comprising a manually actuable release mechanism (50) for releasing the locking mechanism (46).

11. Table arrangement (10) according to one of Claims 1 to 10,
which further comprises a support element (36), the first end of which is connected to the mounting element (12) such that it can be pivoted about a second pivot axis (S2), and the second end of which is connected to the first table element (20) such that it can be pivoted about a third pivot axis (S3), with the result that the support element (36) can be pivoted relative to the mounting element (12) and the first table element (20) between a rest position, in which the support element (36) is arranged substantially parallel to the first table element (20), and a support position, in which a longitudinal axis (L1) of the first table element (20) forms, with a longitudinal axis (L3) of the support element (36), an angle of approximately 30 to 60°, in particular an angle of approximately 40 to 50°, and, in particular, preferably an angle of approximately 45°.

12. Table arrangement (10) according to one of Claims 1 to 11,
which further comprises a securing mechanism (38) for securing the first table element (20) in its stowage position.

13. Passenger cabin region (100) comprising:
- a fastening structural element (102), and
- a table arrangement (10) according to one of Claims 1 to 12, wherein the mounting element (12) of the table arrangement (10) is fastened to the fastening structural element (102).

14. Passenger cabin region (100) according to Claim 13, wherein a flight attendant seat (104) is fastened to the fastening structural element (102) adjacently with respect to the table arrangement (10).

## Revendications

1. Ensemble de table (10) pour un aéronef avec :
- un élément de montage (12), qui peut être fixé sur un élément de structure de fixation (102) et qui définit un plan de montage (E),
- un premier élément de table (20) relié à l'élément de montage (12), le premier élément de table (20) pouvant être pivoté par rapport à l'élément de montage (12) autour d'un premier axe de pivotement (S1) entre une position de rangement, dans laquelle le premier élément de table (20) et son axe longitudinal médian (L1) s'étendent sensiblement parallèlement au plan de montage (E) défini par l'élément de montage (12), et une position d'utilisation, dans laquelle le premier élément de table (20) et son axe longitudinal médian (L1) s'étendent sensiblement perpendiculairement au plan de montage (E) défini par l'élément de montage (12), et
- un deuxième élément de table (22) relié au premier élément de table (20), le deuxième élément de table (22) étant disposé sensiblement parallèlement au premier élément de table (20) et pouvant tourner par rapport au premier élément de table (20) autour d'un axe de rotation (D), qui est disposé parallèlement au plan de montage (E) dans la position d'utilisation, le premier axe de pivotement (S1) pouvant être déplacé entre une position de repos et une position de fonctionnement par rapport à l'élément de montage (12) lors d'un transfert du premier élément de table (20) entre sa position de rangement et sa position d'utilisation,
**caractérisé en ce que**
- l'axe de rotation (D) est disposé perpendiculairement au plan de montage (E) dans la position de rangement et
- le deuxième élément de table (22) peut être coulissé par rapport au premier élément de table (20) dans une direction parallèlement à l'axe longitudinal médian (L1) du premier élément de table (20) et à l'axe longitudinal (L2) du deuxième élément de table (22) au moins lorsque le premier élément de table (20) est disposé dans sa position de rangement.

2. Ensemble de table (10) selon la revendication 1,
le deuxième élément de table (22) étant relié au premier élément de table (20) dans la zone d'une extrémité, opposée au premier axe de pivotement (S1), du premier élément de table (20) et/ou un élément de production de force de frottement (28) étant prévu dans la zone de l'axe de rotation (D), lequel est mis au point pour minimiser un déplacement non souhaité du deuxième élément de table (22) par rapport au premier élément de table (20) autour de l'axe de rotation (D).

3. Ensemble de table (10) selon la revendication 1 ou 2,
le deuxième élément de table (22) pouvant être tourné par rapport au premier élément de table (20) autour de l'axe de rotation (D) entre une position de superposition, dans laquelle le premier et le deuxième élément de table (22) sont disposés dans une position se chevauchant au maximum, et une position de travail, dans laquelle l'axe longitudinal (L1) du premier élément de table (20) forme avec l'axe longitudinal (L2) du deuxième élément de table (22) un angle d'environ 80° à 120°, en particulier un angle d'environ 90 à 110°.

4. Ensemble de table (10) selon l'une des revendications 1 à 3,
- le deuxième élément de table (22) ayant une surface inférieure à celle du premier élément de table (20) et/ou
- le deuxième élément de table (22) étant réalisé en congruence avec une section du premier élément de table (20), et/ou
- le premier élément de table (20) étant pourvu d'un premier profil de protection d'arête (31a), qui s'étend le long au moins d'une section d'un bord périphérique du premier élément de table (20) et/ou dépasse d'une surface de table (26) du premier élément de table (20) dans une direction parallèlement à l'axe de rotation (D) ; et/ou
- le deuxième élément de table (22) étant pourvu d'un deuxième profil de protection d'arête (31b), qui s'étend le long au moins d'une section d'un bord périphérique du deuxième élément de table (22) et/ou dépasse d'une surface de table (30) du deuxième élément de table (22) dans une direction parallèlement à l'axe de rotation (D) ; et/ou
- la surface de table (26) du premier élément de table (20) étant réalisée de manière antidérapante ; et/ou
- la surface de table (30) du deuxième élément de table (22) étant réalisée de manière antidérapante.

5. Ensemble de table (10) selon l'une des revendications 1 à 4,
le deuxième élément de table (22) étant disposé de telle manière par rapport au premier élément de table (20) qu'un côté inférieur (24) du deuxième élément de table (22) est tourné vers une surface de table (26) du premier élément de table (20), et/ou le premier élément de table (20) et le deuxième élément de table (22) étant dimensionnés de telle sorte qu'un utilisateur de l'ensemble de table (10) peut déposer trois feuilles DIN A4 sur le premier élément de table (20) et le deuxième élément de table (22), et/ou le premier élément de table (20) étant formé de telle sorte que sa dimension est plus grande en direction de son axe longitudinal (L1) que sa dimension dans une direction perpendiculairement à son axe longitudinal (L1), et/ou le deuxième élément de table (22) étant formé de telle sorte que sa dimension en direction de son axe longitudinal (L2) est plus grande que sa dimension dans une direction perpendiculairement à son axe longitudinal (L2), et/ou une poignée (32) étant réalisée sur le premier élément de table (20).

6. Ensemble de table (10) selon l'une des revendications 1 à 5,
qui comprend en outre un dispositif de guidage (44) destiné à guider le déplacement du premier axe de pivotement (S1) entre sa position de repos et sa position de fonctionnement.

7. Ensemble de table (10) selon l'une des revendications 1 à 6,
l'élément de montage (12) comprenant deux parois latérales (14, 16), qui s'étendent sensiblement perpendiculairement au plan de montage (E) défini par l'élément de montage (12) et/ou sensiblement parallèlement l'une à l'autre, et/ou l'élément de montage (12) comprenant une paroi arrière (18), qui s'étend sensiblement dans le plan de montage (E) défini par l'élément de montage (12).

8. Ensemble de table (10) selon l'une des revendications 1 à 7,
qui comprend en outre un mécanisme d'arrêt (46) destiné à arrêter le premier élément de table (20) dans sa position d'utilisation.

9. Ensemble de table (10) selon la revendication 8,
le mécanisme d'arrêt (46) étant configuré de telle sorte qu'il peut être activé par l'application d'une force de pression sur une surface de table (26) du premier élément de table (20) disposé dans sa position d'utilisation, et/ou le mécanisme d'arrêt (46) étant configuré de telle sorte que son activation est liée à un bruit audible.

10. Ensemble de table (10) selon la revendication 8 ou 9,
qui comprend en outre un mécanisme de desserrage (50) activable manuellement destiné à desserrer le mécanisme d'arrêt (46).

11. Ensemble de table (10) selon l'une des revendications 1 à 10,
qui comprend en outre un élément d'appui (36), dont la première extrémité est reliée à l'élément de montage (12) de manière à pouvoir pivoter autour d'un deuxième axe de pivotement (S2) et dont la seconde extrémité est reliée au premier élément de table (20) de manière à pouvoir pivoter autour d'un troisième axe de pivotement (S3) de telle sorte que l'élément d'appui (36) peut être pivoté par rapport à l'élément de montage (12) et au premier élément de table (20) entre une position de repos, dans laquelle l'élément d'appui (36) est disposé sensiblement parallèlement au premier élément de table (20), et une position d'appui, dans laquelle un axe longitudinal (L1) du premier élément de table (20) forme avec un axe longitudinal (L3) de l'élément d'appui (36), un angle d'environ 30 à 60°, en particulier un angle d'environ 40 à 50°, et en particulier de manière préférée un angle d'environ 45°.

12. Ensemble de table (10) selon l'une des revendications 1 à 11,
qui comprend en outre un mécanisme de blocage (38) destiné à bloquer le premier élément de table (20) dans sa position de rangement.

13. Zone de cabine pour passagers (100), qui comprend :
- un élément de structure de fixation (102) et
- un ensemble de table (10) selon l'une des revendications 1 à 12, l'élément de montage (12) de l'ensemble de table (10) étant fixé sur l'élément de structure de fixation (102).

14. Zone de cabine de passagers (100) selon la revendication 13,
un siège de membre d'équipage (104) étant fixé sur l'élément de structure de fixation (102) de manière adjacente à l'ensemble de table (10).
